# EUROPEAN PATENT APPLICATION

(11) **EP 4 033 132 A1**
(43) Date of publication of application: **27.07.2022**
(21) Application number: 20865976.3
(22) Date of filing: 27.08.2020
(51) Int. Cl.: F16K 31/06, H01F 7/06

(54) **RESIN MOLD ELECTROMAGNETIC COIL AND ELECTROMAGNETIC VALVE COMPRISING SAME**

(30) Priority: 19.09.2019 JP 2019170119
(71) Applicant: Fujikoki Corporation, Tokyo 158-0082 (JP)
(72) Inventor: KOJIMA Yasushi, Tokyo 158-0082 (JP); AMAIKE Shotaro, Tokyo 158-0082 (JP)
(74) Representative: Ter Meer Steinmeister & Partner
(86) International application number: PCT/JP2020/032278
(87) International publication number: WO 2021/054070

(57) **Abstract**

In an electromagnetic coil (11) formed by covering a wire (15) which is wound to a bobbin, a pair of connection terminals (a first terminal (31a) and a second terminal (31 b)) for connecting the wire to an external circuit, and a diode (41) which is connected between the connection terminals, with a mold resin (51), the first terminal has a diode attaching portion (37a) to which a starting point of the wire is connected, and which is disposed in a base end portion of the first terminal in such a manner as to rise up from an outer surface of a flange (14a) of the bobbin, the second terminal has a diode attaching portion (37b) to which an ending point of the wire is connected, and which is disposed in a base end portion of the second terminal in such a manner as to rise up from the outer surface of the flange in parallel to the diode attaching portion of the first terminal, and the diode is connected in such a manner as to bridge between the diode attaching portion of the first terminal and the diode attaching portion of the second terminal.

## Description

### TECHNICAL FIELD

The present invention relates to a resin molded electromagnetic coil, and more particularly to a resin molded electromagnetic coil in which a flywheel diode is integrally molded with a resin, and a solenoid coil provided with the same.

### BACKGROUND ART

A resin molded type electromagnetic coil has been used in a solenoid valve, the resin molded type electromagnetic coil being formed by covering a magnetic wire (hereinafter, often refer simply to as "wire") wound to a bobbin or a connection terminal with a resin, and integrally molding a connector mating portion mated to a connector of an external device with the resin.

Further, in the electromagnetic coil mentioned above, in order to protect the other circuit elements such as a switching element from a surge voltage generated when switching energization of the electromagnetic coil, a flywheel diode (free-wheeling diode or hereinafter often refer simply to as "diode") may be provided.

Further, the following patent literatures are provided for disclosing the resin molded type electromagnetic coil provided with the diode as mentioned above.

### CITATION LIST

### PATENT LITERATURE

Patent Literature 1: Japanese Unexamined Patent Publication No. 2002-31052
Patent Literature 2: Japanese Unexamined Patent Publication No.

### SUMMARY OF INVENTION

### TECHNICAL PROBLEM

In the meantime, the conventional electromagnetic coil mentioned above is not sufficient in an attaching structure of the diode and a workability when manufacturing and leaves some room for improvement.

More specifically, in the invention described in the patent literature 1, a diode 38 is installed in an inner portion of a connector portion 3, however, a barrier property for a moisture and a foreign matter is not high in comparison with a structure which is integrally sealed by a mold resin. Further, in this invention, an attaching work is not necessarily easy since a terminal portion 38a of the diode 38 should be press fitted and fixed to a notch portion 39 which is disposed at the deepest position of the narrow tubular connection portion 3, so that it is hard to visually confirm whether or not the connection is completely achieved.

On the contrary, in the invention described in the patent literature 2, a diode is sealed with a mold resin. However, in this invention, a step of appropriately bending a midstream (a support portion 373) of a terminal 37 is required in addition to a step of installing a diode for connecting a diode 39, and the workability is not good in the same manner as the invention described in the patent literature 1 mentioned above, so that there is a disadvantage that the number of steps for manufacturing is increased.

Therefore, an object of the present invention is to simplify a step of manufacturing a resin molded electromagnetic coil by making attachment of a diode easy while employing a mold structure which can sufficiently protect the diode from a moisture and a foreign matter.

### SOLUTION TO PROBLEM

In order to solve the problem and achieve the object, a resin molded electromagnetic coil (hereinafter, often refer simply to as "electromagnetic coil", "molded coil" or "coil") according to the present invention is a resin molded electromagnetic coil including a magnetic wire which is wound to a bobbin, a pair of connection terminals for electrically connecting the magnet wire to an external circuit, and a flywheel diode which is connected between the pair of connection terminals, the resin molded electromagnetic coil being constructed by covering the magnet wire, the pair of connection terminals and the flywheel diode with a mold resin. Further, in the electromagnetic coil according to the present invention, the bobbin has a tubular portion to which the magnet wire is wound, a first flange which is disposed in one end portion of the tubular portion and protrudes outward from an outer peripheral surface of the tubular portion, and a second flange which is disposed in the other end portion of the tubular portion and protrudes outward from the outer peripheral surface of the tubular portion. In this case, "outward" means a direction which gets away from a center axis of the tubular portion.

Further, the pair of connection terminals include a first terminal and a second terminal which are disposed so as to extend in parallel to each other and outward from an edge portion of the first flange. Further, a starting point of the magnet wire is connected to the first terminal, and the first terminal has a diode attaching portion which is disposed in the first terminal in such a manner as to stand up in an opposite direction to the second flange (a direction getting away from the second flange) from an outer surface of the first flange. Further, an ending point of the magnet wire is connected to the second terminal, and the second terminal has a diode attaching portion which is disposed in the second terminal in such a manner as to stand up in an opposite direction to the second flange from the outer surface of the first flange in parallel to the diode attaching portion of the first terminal.

Further, the flywheel diode is connected so as to be bridged between the diode attaching portion of the first terminal and the diode attaching portion of the second terminal.

In the electromagnetic coil according to the present invention, the diode is arranged in the outer side of the first flange corresponding to one flange of the bobbin (the surface which is far away from the second flange in both the front and rear surfaces of the first flange) for easily attaching the diode. However, the diode is well protected from the moisture and the foreign matter since the diode is covered with the mold resin together with the coil main body (the bobbin and the magnet wire) and the connection terminal. The term "mold resin" mentioned above means a resin which is used in formation using a mold such as an injection forming and a cast molding forming.

According to one aspect of the present invention, the first flange has a first terminal support hole into which a base end portion of the first end is inserted to allow the first terminal to be supported, and a second terminal support hole into which a base end portion of the second terminal is inserted to allow the second terminal to be supported. Further, the first terminal support hole has a slit-like top face opening which allows the diode attaching portion of the first terminal to rise up from the outer surface of the first flange to an opposite direction to the second flange when the base end portion of the first terminal is inserted into the first terminal support hole. Further, the second terminal support hole has a slit-like top face opening which allows the diode attaching portion of the second terminal to rise up from the outer surface of the first flange to an opposite direction to the second flange when the base end portion of the second terminal is inserted into the second terminal support hole.

Further, according to the other aspect of the present invention, the diode attaching portion of the first terminal is provided with a cutout slit which extends approximately in parallel to the outer surface of the first flange and in a direction from the base end portion side of the first terminal toward a leading end portion side and is capable of interposing a lead portion of the diode, and the diode attaching portion of the second terminal is provided with a cutout slit which extends approximately in parallel to the outer surface of the first flange and in a direction from the base end portion side of the second terminal toward a leading end portion side and is capable of interposing the lead portion of the diode. Further, the diode can be installed between the first terminal and the second terminal by interposing the one lead portion of the diode to the cutout slit of the first terminal and interposing the other lead portion of the diode to the cutout slit of the second terminal.

The diode in the present invention is typically an axial diode with a shaft-like lead portion (an axial lead diode).

Further, according to further the other aspect of the present invention, a concave portion is formed in the outer surface of the first flange, the concave portion to which the main body portion of the diode is fitted when the diode is installed between the first terminal and the second terminal. Further, the concave portion is preferably provided with a pair of side walls which control movement of the main body portion of the diode in a lateral direction and are faced each other on the assumption that the lateral direction is a direction of arranging the diode attaching portion of the first terminal and the diode attaching portion of the second terminal.

This is because the diode is more securely retained between the pair of diodes attaching portions. More specifically, in a case where the diode main body portion is retained within the concave portion as mentioned above, it is possible to prevent any trouble from being generated during the manufacturing, for example, prevent the diode from being pushed by the mold resin when performing the injection molding to be moved and deteriorate the connection to the terminal, and prevent the cavity from being generated around the diode.

Further, on the assumption that a longitudinal direction is a direction which is in parallel to the first flange and is orthogonal to the lateral direction, "front" is a side which is farther from a center axis of the bobbin in the longitudinal direction, and "rear" is a side which is closer to the center axis, a bottom surface of the concave portion may have a rear bottom surface portion which is a descending slope from a rear edge portion toward an intermediate position in the longitudinal direction, and a front bottom surface portion which is an ascending slope from the intermediate position toward a front edge portion, and the diode may be configured to be arranged on the intermediate position in the longitudinal direction in such a manner that the diode is sandwiched between the rear bottom surface portion and the front bottom surface portion when the diode is installed between the first terminal and the second terminal. In other words, the bottom surface of the concave portion is formed into a V-shaped form in the longitudinal direction and the diode main body portion is accommodated in a valley portion of the V-shaped bottom surface.

By forming the bottom surface of the concave portion into the V-shaped form as mentioned above, the diode main body portion can be smoothly guided to a predetermined position (the intermediate position and the valley portion of the V-shaped bottom surface mentioned above) within the concave portion when the diode is arranged between the pair of diode attaching portions (the diode attaching portion of the first terminal and the diode attaching portion of the second terminal) from the rear side closer to the center axis of the bobbin while inserting the lead portion into the cutout slit, thereby improving a workability for attaching the diode. Further, since the diode main body portion is installed in the V-shaped valley portion in such a manner as to be sandwiched between the rear bottom surface portion and the front bottom surface portion corresponding to the inclined surfaces, it is possible to prevent the diode from being pushed by the mold resin when manufacturing (for example, molding) and prevent the diode from being misaligned in the longitudinal direction.

Further, the electromagnetic coil according to the present invention may be provided with a connector mating portion in which the leading end portion of the first terminal and the leading end portion of the second terminal are arranged inside and which mates with a connector of an external circuit for connecting the magnet wire to the external circuit.

Further, the solenoid valve according to the present invention is provided with the resin molded electromagnetic coil according to any one of the aspects of the present invention mentioned above.

According to the present invention, it is possible to well protect the diode from the moisture and the foreign matter, easily attach the diode and simplify the process of manufacturing the resin molded electromagnetic coil.

The other objects, features and advantages of the present invention can be apparent from the following description of embodiments according the present invention which will be given on the basis of the accompanying drawings. It is apparent for a person skilled in the art that the present invention is not limited to the following embodiments, but can be variously modified within the scope of the claims. Further, in the drawings, same reference numerals denote same or corresponding portions.

### BRIEF DESCRIPTION OF DRAWINGS

Fig. 1 is a perspective view showing a resin molded electromagnetic coil according to an embodiment of the present invention.
Fig. 2 is a perspective view showing a process of manufacturing the resin molded electromagnetic coil according to the embodiment (in a state before a connection terminal is installed).
Fig. 3 is a perspective view showing a process of manufacturing the resin molded electromagnetic coil according to the embodiment (in a state in which the connection terminal is installed).
Fig. 4 is a perspective view showing a process of manufacturing the resin molded electromagnetic coil according to the embodiment (in a state in which a magnet wire is wound to a bobbin).
Fig. 5 is a perspective view showing a process of manufacturing the resin molded electromagnetic coil according to the embodiment (in a state in which the magnet wire and the connection terminal are connected).
Fig. 6 is a perspective view showing a process of manufacturing the resin molded electromagnetic coil according to the embodiment (in a state in which a diode is attached).
Fig. 7 is a vertical cross sectional view showing a terminal attaching portion of the resin molded electromagnetic coil according to the embodiment (a cross section as viewed along a line A-A in Fig. 2).
Fig. 8 is a vertical cross sectional view showing the terminal attaching portion of the resin molded electromagnetic coil according to the embodiment (a cross section as viewed along a line B-B in Fig. 2).

### DESCRIPTION OF EMBODIMENTS

### [First Embodiment]

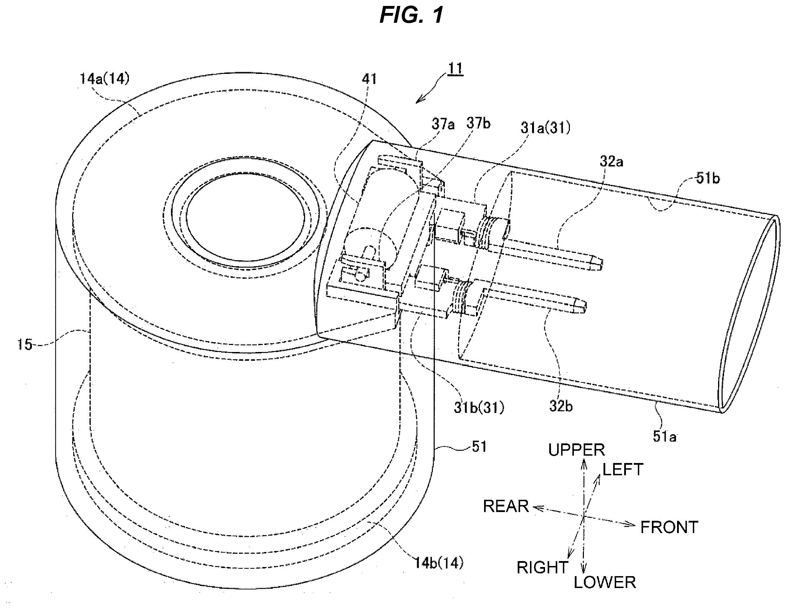

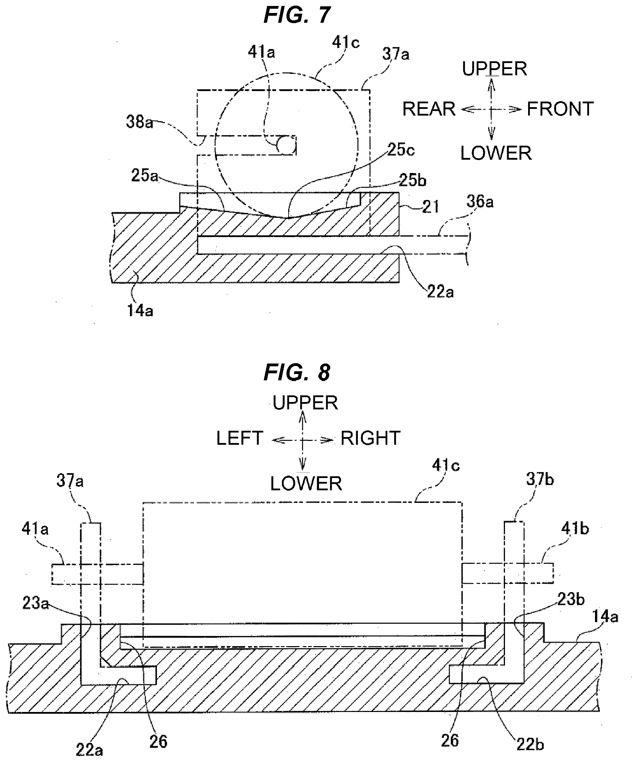

As shown in Figs. 1 to 8, a resin molded electromagnetic coil 11 according to an embodiment of the present invention is constructed by covering a coil main body, a pair of connection terminals 31 (31a and 31b) and a flywheel diode 41 with a molded resin 51. The coil main body is constructed by winding a magnetic wire 15 to a bobbin 12. A pair of connection terminals 31 connect the coil main body to an external circuit (an external device) for feeding an electric power to the magnetic wire 15. The flywheel 41 is connected in parallel between the connection terminals 31. Two-dimensional or three-dimensional coordinates are shown in each of the drawings, the coordinates indicating a longitudinal direction, a lateral direction and a vertical direction and being orthogonal to each other. The following description will be given on the basis of these directions. Further, the vertical direction is set to a perpendicular direction, and a direction including the longitudinal direction and the lateral direction and being orthogonal to the perpendicular direction is set to a horizontal direction. Further, it goes without saying that the resin molded electromagnetic coil 11 according to the present invention can be preferably employed as an electromagnetic coil of a solenoid valve.

The bobbin 12 is constructed by a tubular portion 13 having a cylindrical shape, and a pair of flanges 14 disposed in both ends of the tubular portion 13. Further, a pair of flanges 14 are constructed by a first flange 14a which horizontally protrudes circumferentially from an upper end portion of the tubular portion 13, and a second flange 14b which horizontally protrudes circumferentially from a lower end portion of the tubular portion 13. Further, a terminal attaching portion 21 for installing a connection terminal 31 is formed in a front edge portion of an upper surface of the first flange 14a.

A pair of connection terminals 31 installed in the terminal attaching portion 21, that is, a first terminal 31a and a second terminal 31b are both made of an electrically conductive material, and are installed so as to extend in parallel to each other at a fixed distance laterally and horizontally forward. The first terminal 31a corresponds to one connection terminal among the connection terminals 31 and the second terminal 31b corresponds to the other connection terminal.

Further, leading end portions (front end portions) of the respective connection terminals 31a and 31b are provided with external connection portions 32a and 32b which electrically connect to an external circuit (not shown). Further, base end portions (rear end portions) of the respective connection terminals 31a and 31b form support portions 36a and 36b for fixing the connection terminals 31a and 31b to the terminal attaching portion 21. Further, intermediate portions of the respective terminals 31a and 31b positioned between the leading end portions (the external connection portions 32a and 32b) and the base end portions (the support portions 36a and 36b) are set to wire connection portions 33a and 33b for connecting the magnet wire 15.

The external connection portions 32a and 32b at the leading ends of the connection terminals protrude horizontally into an internal space 51b of a connector mating portion 51a mentioned later for allowing an electrical connection to the external circuit.

A constriction portion 34 is respectively formed in the wire connection portions 33a and 33b in the middle of the connection terminals, the constriction portion 34 being narrowed so as to allow the magnet wire 15 to be tied up (wound up). Further, the wire connection portions 33a and 33b in the middle of the connection terminals are provided with a protruding piece 35 which can pinch an end portion (a starting point portion 15a or an ending point portion 15b) of the magnet wire 15. The protruding piece 35 can pinch the end portion of the wire 15 between the protruding piece 35 and the upper surfaces of the wire connection portions 33a and 33b by bending downward.

The support portions 36a and 36b at the base ends of the connection terminals are formed into a tabular shape which expands horizontally in connection to the wire connection portions 33a and 33b, however, are provided with tabular diode attaching portions 37a and 37b which rise up upward perpendicularly from an edge portion. The support portions 36a and 36b can be press fitted (inserted) into terminal support holes 22a and 22b mentioned later, thereby allowing the connection terminals 31a and 31b to be supported to the terminal attaching portion 21.

The diode attaching portions 37a and 37b are formed cutout slits 38a and 38b which extend horizontally forward from rear ends, and can attach the diode 41 by interposing lead portions 41a and 41b of the diode 41 to the cutout slits 38a and 38b. The diode 41 is an axial lead type diode in which the lead portions 41a and 41b protrude respectively out of both end surfaces of a columnar diode main body portion 41c.

In the meantime, the terminal attaching portion 21 formed in the front edge portion of the upper surface of the first flange 14a has in a front face thereof a terminal support hole (a first terminal support hole) 22a to which the support portion 36a of the first terminal 31a can be press fitted, and a terminal support hole (a second terminal support hole) 22b to which the support portion 36b of the second terminal 31b can be press fitted.

Further, the respective terminal support holes 22a and 22b are provided with slit-like top face openings 23a and 23b for allowing the diode attaching portions 37a and 37b to protrude vertically upward beyond the upper surface of the terminal attaching portion 21 when the support portions 36a and 36b of the connection terminals 31a and 31b are respectively inserted into the terminal support holes 22a and 22b. Thus, by inserting the respective connection terminals 31a and 31b into the terminal support holes 22a and 22b, the diode attaching portions 37a and 37b protrude out of the top face openings 23a and 23b, and the diode attaching portions 37a and 37b are arranged in right and left sides of a concave portion 24 (mentioned later) with respect to the concave portion 24 so as to face each other.

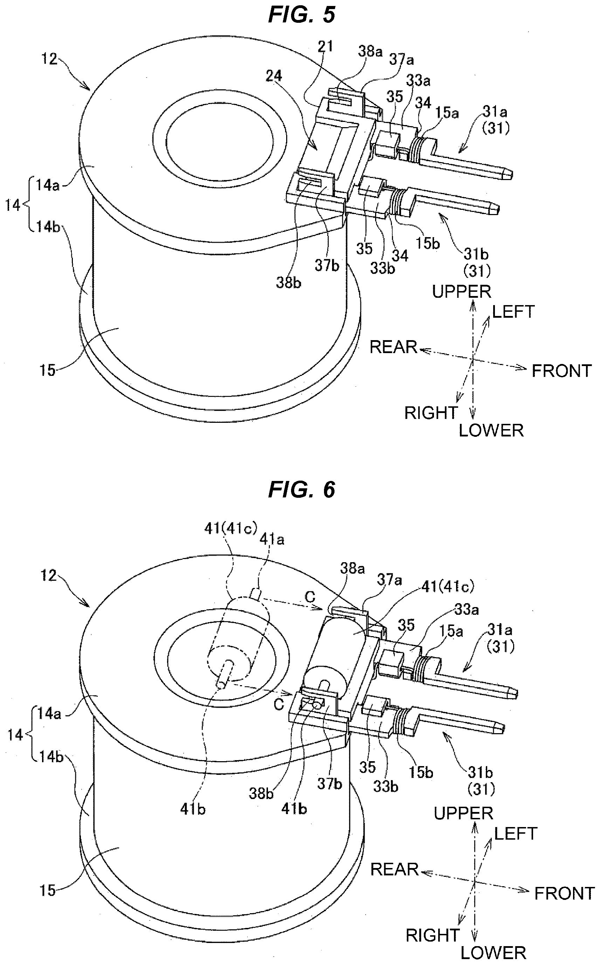

The concave portion 24 to which the diode main body portion 41c cab be fitted is formed in the upper surface of the terminal attaching portion 21. The concave portion 24 is provided with a pair of side walls 26 which control a lateral movement of the diode main body portion 41c and face each other. Further, a bottom surface 25 of the concave portion 24 has a rear bottom surface portion 25a which forms a descending slope from a rear edge portion toward an intermediate position 25c in the longitudinal direction, and a front bottom surface portion 25b which forms an ascending slope from the intermediate position 25c toward a front edge portion. Thus, the diode main body portion 41c is arranged on the intermediate position 25c, that is, the valley portion of the bottom surface 25 of the V-shaped concave portion in such a manner as to be sandwiched between the rear bottom surface portion 25a and the front bottom surface portion 25b, by installing the diode main body portion 41c within the concave portion 24 while respectively interposing the right and left lead portions 25a and 25b to the cutout slit 38a of the first terminal 31a and the cutout slit 38b of the second terminal 31b (refer to Fig. 6).

The coil main body (the bobbin 12 and the wire 15), the diode 41 and the connection terminals 31a and 31b (except the external connection portions 32a and 32b) are covered with the mold resin, and the connector mating portion 51a is integrally formed concurrently with the molding time. The connector mating portion 51a is configured to have an outer shape which adapts to the specification of the external device to be connected, for enabling the connection to the external device in a tubular portion extending horizontally forward from the terminal attaching portion 21 of the first flange 14a.

Further, a rear end portion of the connector mating portion 51a is formed as a solid structure (a structure filled with the resin) for covering and sealing the diode 41, the diode attaching portions 37a and 37b of the connection terminals 31a and 31b, and the wire connection portions 33a and 33b with the mold resin. On the contrary, a front end portion of the connector mating portion 51a is formed as a hollow structure (a structure having an internal space 51b) for exposing the external connection portions 32a and 32b of the connection terminals 31a and 31b and enabling the electrical connection to the external device.

A process of manufacturing the electromagnetic coil according to the present embodiment will be mentioned as follows.

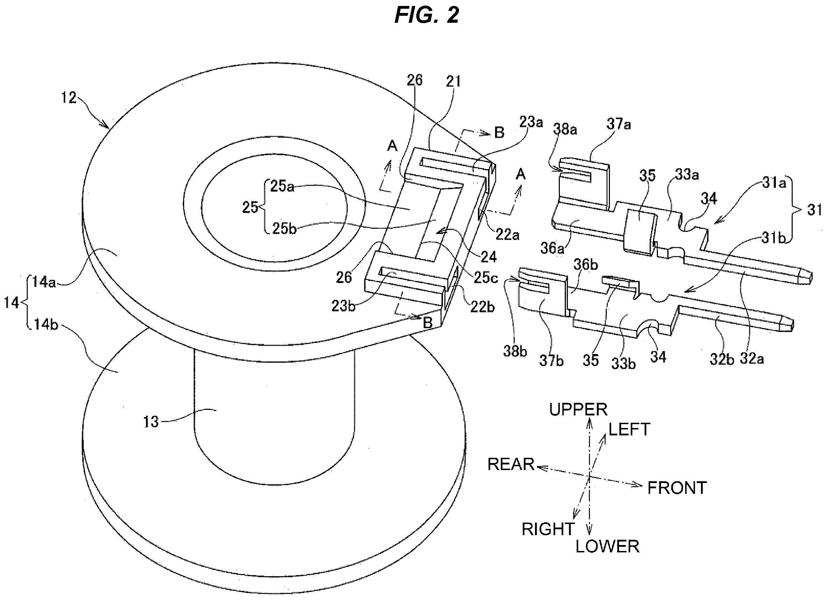

### (1) Attachment of connection terminal to bobbin (refer to Figs. 2 to 3)

The first terminal 31a and the second terminal 31b are fixed to the first flange 14a of the bobbin 12 by press fitting the support portions 36a and 36b of the respective connection terminals 31a and 31b to the respective terminal support holes 22a and 22b of the terminal attaching portion 21 in the upper surface of the first flange 14a.

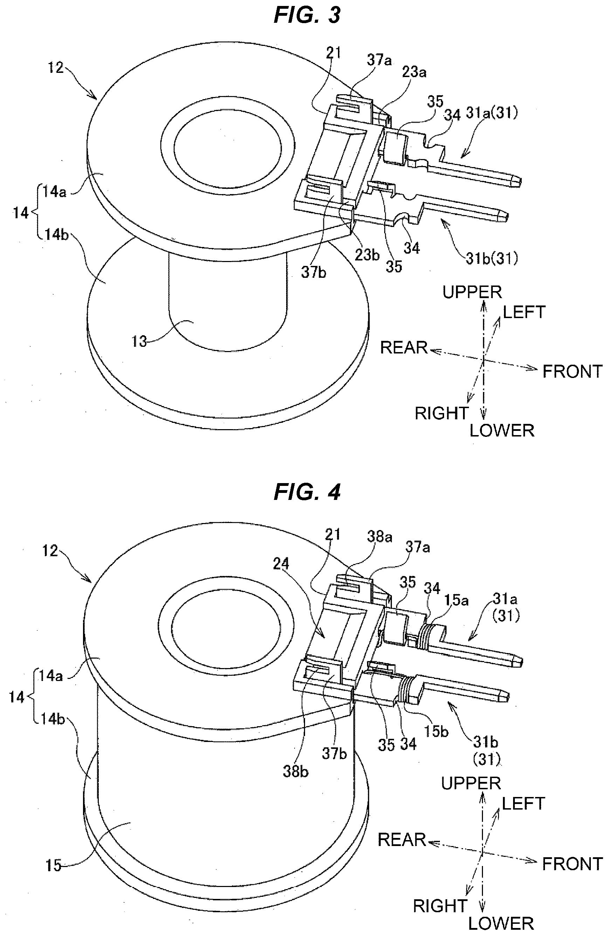

### (2) Winding of magnetic wire to bobbin (refer to Fig. 4)

The starting point portion 15a of the magnet wire 15 drawn from a wire feeding reel of a coil winding machine (not shown) is locked by being wounded to the constriction portion 34 of the first terminal 31a. The bobbin 12 is rotated in this state, and the wire 15 is wound to an outer peripheral surface of the tubular portion 13 in multiple layers.

In this case, the connection terminals 31a and 31b and the diode attaching portions 37a and 37b do not prevent a winding work of the wire 15 and it is possible to efficiently perform the work. This is because the terminal attaching portion 21 exists in the upper surface of the first flange 14a, the connection terminals 31a and 31b extend horizontally in parallel to the upper surface of the first flange 14a, the diode attaching portions 37a and 37b rise upward from the upper surface of the first flange 14a, and the connection terminals 31a and 31b and the diode attaching portions 37a and 37b are arranged while avoiding a path of the wire 15 wound to the bobbin 12 from the automatic coil winding machine.

After the winding work of the wire 15 to the tubular portion 13 is finished, the ending point portion 15b of the wire 15 is locked by being wound to the constriction portion 34 of the second terminal 31b.

### (3) Connection between magnet wire and connection terminal (refer to Fig. 5)

The protruding piece 35 of the first terminal 31a is bent, the starting point portion 15a of the wire 15 is sandwiched between the protruding piece 35 and the terminal intermediate portion (the wire connection portion 33a), the protruding piece 35 and the starting point portion 15a are pinched and pressurized by an electrode (not shown) of a fusing welding machine from above and below so as to be closely attached, and an insulating coated layer of the wire 15 is melted by energizing them, thereby welding and electrically connecting the starting point portion 15a of the wire 15 and the first terminal 31a. In the same manner, the protruding piece 35 of the second terminal 31b is bent, the ending point portion 15b of the wire 15 is sandwiched between the protruding piece 35 and the terminal intermediate portion, the protruding piece 35 and the ending point portion 15b are pinched and pressurized by the electrode (not shown) of the fusing welding machine from above and below so as to be closely attached, and the insulating coated layer of the wire 15 is melted by energizing them, thereby welding and electrically connecting the ending point portion 15b of the wire 15 and the second terminal 31b.

### (4) Attachment of diode (refer to Fig. 6)

The diode 41 is attached by inserting the diode main body portion 41c into the concave portion 24 in the upper surface of the terminal attaching portion 21 while pinching the lead portions 41a and 41b of the diode 41 to the respective cutout slits 38a and 38b of the diode attaching portions 37a and 37b (refer to an arrow C in Fig. 6). Thereafter, the lead portions 41a and 41b and the diode attaching portions 37a and 37b are soldered and electrically connected. Since the diode attaching portions 37a and 37b and the concave portion 24 are exposed to the upper surface of the first flange 14a in the coil according to the present embodiment, the diode 41 can be easily attached and soldered, and it is possible to efficiently perform these works.

### (5) Mold (refer to Fig. 1)

A whole of the coil is installed within the metal mold and the mold resin is injected and filled around the coil main body. At the same time, the connector mating portion 51a is integrally formed. The internal space 51b of the leading end portion of the connector mating portion 51a may be formed by arranging an insert for mold. For example, polyphenylene sulfide (PPS) can be preferably used for the mold resin.

When molding, the lead portions 41a and 41b of the diode 41 are pinched by the cutout slits 38a and 38b, and the main body portion 41c is fitted to the concave portion 24. Therefore, it is possible to prevent the diode 41 from being misaligned to cause a poor connection, and prevent a cavity from being generated around the diode 41, and it is possible to improve a fabrication yield for the electromagnetic coil with diode.

### REFERENCE SIGNS LIST

- 11: resin molded electromagnetic coil
- 12: bobbin
- 13: tubular portion
- 14: flange
- 14a: first flange
- 14b: second flange
- 15: magnet wire
- 21: terminal attaching portion
- 22a, 22b: terminal support hole
- 23a, 23b: top face opening
- 24: concave portion
- 25: bottom surface of concave portion
- 25a: rear bottom surface portion
- 25b: front bottom surface portion
- 25c: intermediate position (valley portion in bottom surface of V-shaped concave portion)
- 26: side wall
- 31: connection terminal
- 31a: first terminal
- 31b: second terminal
- 32a, 32b: external connection portion
- 33a, 33b: wire connection portion
- 34: constriction portion
- 35: protruding piece
- 36a, 36b: support portion
- 37a, 37b: diode attaching portion
- 38a, 38b: cutout slit
- 41: flywheel diode
- 41a, 41b: lead portion
- 41c: diode main body portion
- 51: mold resin
- 51a: connector mating portion
- 51b: internal space of connector mating portion

## Claims

1. A resin molded electromagnetic coil comprising:
a magnetic wire which is wound to a bobbin, a pair of connection terminals for electrically connecting the magnet wire to an external circuit;
a flywheel diode which is connected between the pair of connection terminals; and
the resin molded electromagnetic coil being constructed by covering the magnet wire, the pair of connection terminals and the flywheel diode with a mold resin,
**characterized by**
the bobbin comprises:
a tubular portion to which the magnet wire is wound;
a first flange which is disposed in one end portion of the tubular portion and protrudes outward from an outer peripheral surface of the tubular portion; and
a second flange which is disposed in the other end portion of the tubular portion and protrudes outward from the outer peripheral surface of the tubular portion,
the pair of connection terminals include a first terminal and a second terminal which are disposed so as to extend in parallel to each other and outward from an edge portion of the first flange,
a starting point of the magnet wire is connected to the first terminal,
the first terminal has a diode attaching portion which is disposed in the first terminal in such a manner as to stand up in an opposite direction to the second flange from an outer surface of the first flange,
an ending point of the magnet wire is connected to the second terminal,
the second terminal has a diode attaching portion which is disposed in the second terminal in such a manner as to stand up in an opposite direction to the second flange from the outer surface of the first flange in parallel to the diode attaching portion of the first terminal,
the flywheel diode is connected so as to be bridged between the diode attaching portion of the first terminal and the diode attaching portion of the second terminal.

2. The resin molded electromagnetic coil according to claim 1, wherein the first flange comprises:
a first terminal support hole into which a base end portion of the first end is inserted to allow the first terminal to be supported; and
a second terminal support hole into which a base end portion of the second terminal is inserted to allow the second terminal to be supported,
wherein the first terminal support hole has a slit-like top face opening which allows the diode attaching portion of the first terminal to rise up from the outer surface of the first flange to an opposite direction to the second flange when the base end portion of the first terminal is inserted into the first terminal support hole, and
wherein the second terminal support hole has a slit-like top face opening which allows the diode attaching portion of the second terminal to rise up from the outer surface of the first flange to an opposite direction to the second flange when the base end portion of the second terminal is inserted into the second terminal support hole.

3. The resin molded electromagnetic coil according to claim 1 or 2, wherein the flywheel diode is an axial diode with a shaft-like lead portion.

4. The resin molded electromagnetic coil according to any one of claims 1 to 3, wherein the diode attaching portion of the first terminal is provided with a cutout slit which extends approximately in parallel to the outer surface of the first flange and in a direction from the base end portion side of the first terminal toward a leading end portion side and is capable of interposing a lead portion of the flywheel diode,
wherein the diode attaching portion of the second terminal is provided with a cutout slit which extends approximately in parallel to the outer surface of the first flange and in a direction from the base end portion side of the second terminal toward a leading end portion side and is capable of interposing the lead portion of the flywheel diode, and
wherein the diode is installed between the first terminal and the second terminal by interposing the one lead portion of the flywheel diode to the cutout slit of the first terminal and interposing the other lead portion of the flywheel diode to the cutout slit of the second terminal.

5. The resin molded electromagnetic coil according to claim 4, wherein a concave portion is formed in the outer surface of the first flange, the concave portion to which the main body portion of the flywheel diode is fitted when the flywheel diode is installed between the first terminal and the second terminal.

6. The resin molded electromagnetic coil according to claim 5, wherein the concave portion is provided with a pair of side walls which control movement of the main body portion of the flywheel diode in a lateral direction and are faced each other on the assumption that the lateral direction is a direction of arranging the diode attaching portion of the first terminal and the diode attaching portion of the second terminal.

7. The resin molded electromagnetic coil according to claim 5 or 6, wherein on the assumption that a lateral direction is a direction of arranging the diode attaching portion of the first terminal and the diode attaching portion of the second terminal, a longitudinal direction is a direction which is in parallel to the first flange and is orthogonal to the lateral direction, a front side is a side which is farther from a center axis of the bobbin in the longitudinal direction, and a rear side is a side which is closer to the center axis, a bottom surface of the concave portion has a rear bottom surface portion which is a descending slope from a rear edge portion toward an intermediate position in the longitudinal direction, and a front bottom surface portion which is an ascending slope from the intermediate position toward a front edge portion, and
wherein the flywheel diode is arranged on the intermediate position in the longitudinal direction in such a manner that the flywheel diode is sandwiched between the rear bottom surface portion and the front bottom surface portion when the flywheel diode is installed between the first terminal and the second terminal.

8. The resin molded electromagnetic coil according to any one of claims 1 to 7, further comprising a connector mating portion in which the leading end portion of the first terminal and the leading end portion of the second terminal are arranged inside and which mates with a connector of an external circuit for connecting the magnet wire to the external circuit.

9. A solenoid valve comprising the resin molded electromagnetic coil according to any one of claims 1 to 8.
